# EUROPÄISCHE PATENTSCHRIFT

(11) **EP 4 234 064 B1**
(45) Veröffentlichungstag und Bekanntmachung des Hinweises auf die Patenterteilung: **11.03.2026**
(21) Anmeldenummer: 23186127.9
(22) Anmeldetag: 29.12.2021
(51) Int. Cl.: B01D 29/15, B01D 35/16

(54) **RINGFILTERELEMENT UND FLÜSSIGFILTEREINRICHTUNG**
RING FILTER ELEMENT AND LIQUID FILTER DEVICE
ÉLÉMENT FILTRANT ANNULAIRE ET DISPOSITIF DE FILTRATION DE LIQUIDE

(30) Priorität: 25.01.2021 DE 102021200612
(43) Veröffentlichungstag der Anmeldung: 30.08.2023
(62) Teilanmeldung aus: 21218168.9
(73) Patentinhaber: MAHLE International GmbH, 70376 Stuttgart (DE)
(72) Erfinder: HENSINGER, Heiko, 70599 Stuttgart (DE); LANG, Markus, 74369 Löchgau (DE)
(74) Vertreter: BRP Renaud & Partner mbB Rechtsanwälte Patentanwälte Steuerberater

(56) Entgegenhaltungen:
- WO-A1-2018/087294
- DE-A1- 19 951 085
- DE-T5- 112007 001 880
- US-A1- 2018 257 011

## Beschreibung

Die vorliegende Erfindung betrifft ein Ringfilterelement mit einer oberen Endscheibe, einer unteren Endscheibe und einem dazwischen angeordneten Filtermaterial, gemäß dem Oberbegriff des Anspruchs 1. Die Erfindung betrifft außerdem eine Flüssigfiltereinrichtung mit einem Filtergehäuse mit einem Leerlaufkanal und einem solchen, in dem Filtergehäuse angeordneten Ringfilterelement.

Aus der EP 1 229 985 B1 ist ein gattungsgemäßes Ringfilterelement mit einer oberen Endscheibe, einer unteren Endscheibe und einem dazwischen angeordneten Faltenstern sowie mit einem an der unteren Endscheibe exzentrisch angeordneten und in Axialrichtung abstehenden Pin bekannt.

Aus der DE 11 2018 000 382 T5 ist ein Filtersystem mit einer gewellten, ineinandergreifenden Gehäuse-Endplatten-Schnittstellengeometrie bekannt, bei dem eine Filterelement-Endplatte und eine Filtergehäuse-Komponente an einer Schnittstelle zusammentreffen. Die Filtergehäuse-Komponente umfasst ein wellenförmiges oder sich wiederholendes Muster, das mit einem passenden wellenförmigen oder sich wiederholenden Muster auf der Endplatte des Filterelements kämmt. Das wellenförmige oder sich wiederholende Muster soll verhindern, dass sich das Filterelement in Bezug auf die Filtergehäuse-Komponente des Filtersystems frei dreht.

Aus der DE 11 2007 001 880 T5 ist ein Schnellablassfiltergerät bekannt, umfassend, ein Filtergehäuse, einen Reinflüssigkeitskanal, der axial im Gehäuse verläuft, einen Wartungsablasskanal, der sich an einem axialen Ende des Gehäuses befindet und der radial vom Reinflüssigkeitskanal weggeführt wird.

Aus der WO 2018 / 087 294 A1 ist ein Filtersystem für ein zu filterndes Flüssigmedium bekannt, umfassend ein Filtergehäuse mit einem Gehäusetopf und mit einem Gehäusedeckel, der mittels einer Schraubbewegung auf den Gehäusetopf aufschraubbar oder in den Gehäusetopf einschraubbar ist, um den Gehäusetopf zu verschließen, wobei der Gehäusetopf einen Ablaufkanal mit einer bodenseitigen Ablauföffnung für das Flüssigmedium aufweist.

Aus der US 2018 / 257 011 A1 ist ein Filtereinsatz zur entfernbaren Anordnung in einem Filtergehäuse bekannt, der ein erstes Betätigungsmittel umfasst, das an einem ersten Ende des Filtereinsatzes positioniert ist, wobei das erste Betätigungsmittel eine äußere Kontaktfläche umfasst, die einen Vorsprung oder eine Ausnehmung definiert und wobei der Vorsprung oder die Ausnehmung einen Teil einer Struktur mit variierender Erstreckung in einer axialen Richtung des Filtereinsatzes entlang einer Umfangsrichtung des Filtereinsatzes bildet, so dass das erste Betätigungsmittel eingerichtet ist, um durch ein entsprechendes zweites Betätigungsmittel eines Filtergehäusedeckels betätigt zu werden.

Bei gattungsgemäßen Ringfilterelementen kann es bei einer Dauerbelastung zu einem Abbrechen bzw. Abreißen eines einen Leerlaufkanal verschließenden Pins kommen, was aus einer Druckbelastung einer Endscheibe aufgrund von im Betrieb auftretenden Pulsationen resultiert. Das Abreißen des Pins führt zumindest beim Austausch des Ringfilterelements zu Problemen, da der Pin nicht mehr zusammen mit dem Ringfilterelement herausgezogen werden kann. Darüber hinaus besteht die Gefahr, dass ein abgerissener Pin den Leerlaufkanal während des Betriebs nicht mehr zuverlässig verschließt, wodurch eine einwandfreie Funktion einer mit einem derartigen Ringfilterelement ausgestatteten Flüssigfiltereinrichtung nicht mehr gewährleistet werden kann.

Die vorliegende Erfindung beschäftigt sich daher mit dem Problem, für ein Ringfilterelement der gattungsgemäßen Art eine verbesserte oder zumindest eine alternative Ausführungsform anzugeben, die insbesondere die aus dem Stand der Technik bekannten Nachteile überwindet.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, einem Ringfilterelement über seine untere Endscheibe eine direkte oder indirekte Abstützungsmöglichkeit gegenüber einem Filtergehäuse einer Flüssigfiltereinrichtung zu bieten und dadurch die beim Betrieb der Flüssigfiltereinrichtung auf den Pin einwirkenden Belastungen, insbesondere hervorgerufen durch Pulsationen, deutlich zu reduzieren. Das erfindungsgemäße Ringfilterelement besitzt dabei eine obere Endscheibe, eine untere Endscheibe sowie ein dazwischen angeordnetes Filtermaterial, welches beispielsweise als zick-zack-förmig gefalteter Faltenstern ausgebildet sein kann. An der unteren Endscheibe ist ein exzentrisch angeordneter und in Axialrichtung von der unteren Endscheibe abstehender Pin zum Verschließen eines Leerlaufkanals in einem Filtergehäuse einer Flüssigfiltereinrichtung angeordnet. Erfindungsgemäß ist nun an der unteren Endscheibe separat zu dem Pin zumindest eine in Axialrichtung von der unteren Endscheibe abstehende Abstützkontur zur direkten oder indirekten Abstützung an einem Filtergehäuse vorgesehen. Durch diese zumindest eine Abstützkontur ist es möglich, die untere Endscheibe und darüber das Ringfilterelement direkt oder indirekt gegenüber dem Filtergehäuse abzustützen, was insbesondere bei im Betrieb auftretenden Pulsationen den großen Vorteil bietet, dass die Belastung nicht mehr auf die Schnittstelle vom Pin zu der unteren Endscheibe wirkt, an der eine vergleichsweise große Kerbwirkung auftreten kann, sondern über die Abstützkontur von der Endscheibe oder dem Pin direkt in das Filtergehäuse abgetragen werden kann. Die Druckpulsationen bewirken einen Druck auf die untere Endscheibe und ein Hineindrücken des Pins in den Leerlaufkanal, was bei Druckpulsationen dazu führt, dass sich der Pin kolbenartig im Leerlaufkanal bewegt und an seiner Anbindungsstelle an die untere Endscheibe einer starken Kerbbelastung unterliegt, die langfristig zu einem Abreißen des Pins führt. Die Abstützung der unteren Endscheibe am Filtergehäuse beinhaltet auch die indirekte Abstützung der unteren Endscheibe über den Pin und die Abstützkonturen am Filtergehäuse, wodurch insbesondere der Pin bei auftretenden Druckpulsationen direkt über die Abstützkonturen am Filtergehäuse abgestützt und dadurch nicht mehr in den Leerlaufkanal hineingedrückt werden kann. Hierdurch kann ein Abbrechen des Pins von der unteren Endscheibe, verursacht durch beim Betrieb der Flüssigfiltereinrichtung auftretenden Druckpulsationen, ebenso vermieden werden, wie die damit einhergehenden Nachteile, wie beispielsweise Schwierigkeiten beim Austausch des Ringfilterelements sowie gegebenenfalls auftretende Undichtigkeiten aufgrund des abgebrochenen Pins. Mit der erfindungsgemäßen Lösung, das heißt der zumindest einen erfindungsgemäßen Abstützkontur, kann somit mit nahezu marginalem konstruktivem Mehraufwand eine deutlich erhöhte Funktionssicherheit geschaffen werden. Dabei ist selbstverständlich denkbar, dass die zumindest eine Abstützkontur einstückig mit der unteren Endscheibe ausgebildet und beispielsweise zusammen mit dieser in einem gemeinsamen Kunststoffspritzgießvorgang hergestellt werden kann. Zur Realisierung der Erfindung ist somit lediglich eine einmalige Umstellung eines Kunststoffspritzgießwerkzeugs erforderlich, wobei rein theoretisch selbstverständlich auch denkbar ist, dass die zumindest eine Abstützkontur nachträglich an eine herkömmliche untere Endscheibe angeordnet, beispielsweise angeklebt, wird, was den großen Vorteil bietet, dass auch herkömmliche Ringfilterelemente erfindungsgemäß nachgerüstet werden können.

Die zumindest eine Abstützkontur kann dabei insbesondere auch in einem Übergangsbereich des Pins in die untere Endscheibe angeordnet sein, wodurch der Pin in seinem bislang kerblastgefährdeten Bereich deutlich entlastet und die Gefahr des Abreißens des Pins zumindest reduziert werden kann. Die Abstützkonturen sind lediglich radial versetzt (benachbart) zur Achse des Pins angeordnet.

Bei einer nicht unter die Erfindung fallenden Weiterbildung sind zwei Abstützkonturen vorgesehen, die sich jeweils tangential oder in Umfangsrichtung von einem Schaft des Pins aus erstrecken und sowohl mit dem Schaft des Pins als auch mit der unteren Endscheibe einstückig verbunden sind. Eine derartige Ausführungsform bietet den großen Vorteil, dass die Abstützkonturen sowohl einstückig mit der unteren Endscheibe ausgebildet und damit auch zusammen mit dieser hergestellt werden können, als auch mit dem Schaft des Pins, so dass bei dieser Ausführungsform die untere Endscheibe zusammen mit dem Pin und der zumindest einen Abstützkontur vorzugsweise als einstückiges Kunststoffspritzgussteil und damit konstruktiv einfach und kostengünstig hergestellt werden kann. Durch die einstückige Anbindung der zumindest einen Abstützkontur an den Schaft des Pins, kann darüber hinaus eine Aussteifung des Pins erreicht werden, wodurch dieser robuster und damit unempfindlicher gegenüber Beschädigungen beim Handling ist. Durch die einstückige Anbindung der zumindest einen Abstützkontur an den Schaft des Pins kann insbesondere die dort bislang aufgrund des eckigen Übergangs vom Schaft des Pins in die untere Endscheibe vorhandene Kerbbelastung, die mitursächlich für das Abreißen des Pins aufgrund der Druckpulsationen war, deutlich reduziert werden. Der Schaft des Pins kann dabei insbesondere in einem endscheibennahen Bereich noch als Bestandteil der unteren Endscheibe angesehen werden.

Bei einer nicht unter die Erfindung fallenden Ausführungsform weist der Schaft des Pins einen kreuzförmigen Querschnitt mit zwei sich kreuzenden Stegen auf, wobei zumindest zwei Abstützkonturen an zumindest einen der Stege angeschlossen sind. Die vorzugsweise zwei Abstützkonturen verlängern somit den jeweiligen Steg in Radialrichtung des Schafts des Pins, wobei zur Herstellung der beiden Abstützkonturen in diesem Fall lediglich das Spritzgießwerkzeug im Bereich dieses Steges entsprechend adaptiert werden muss.

Bei einer nicht unter die Erfindung fallenden Ausführungsform weist die zumindest eine Abstützkontur eine zu einer Oberfläche der unteren Endscheibe parallele Abstützfläche auf. Sind zwei Abstützkonturen vorgesehen, so weisen diese jeweils eine zu einer Oberfläche der unteren Endscheibe parallele Abstützfläche auf. Über eine derartige parallele Abstützfläche kann bei einer am Filtergehäuse komplementär dazu ausgebildeten Gegenabstützfläche eine flächige Anlage des Ringfilterelements über seine untere Endscheibe und der zumindest einen Abstützkontur am Filtergehäuse geschaffen werden, wodurch keine hochbelastete punktuelle Lastübertragung erfolgt, sondern die Belastung flächig verteilt werden kann.

Bei einer nicht unter die Erfindung fallenden Ausführungsform weist die zumindest eine Abstützkontur eine zu einer Oberfläche der unteren Endscheibe geneigte Abstützfläche auf, wobei für den Fall, dass zwei Abstützkonturen vorgesehen sind, diese jeweils eine zu einer Oberfläche der unteren Endscheibe geneigte Abstützfläche aufweisen und beispielsweise pfeilartig verlaufen. Eine derartige geneigte Abstützfläche kann beispielsweise eine Axialabstützung der unteren Endscheibe und damit des Ringfilterelements an einem trichterförmigen Eingang des Leerlaufkanals bewirken. Die geneigte Abstützfläche kann in diesem Fall entweder eben oder konvex ausgebildet sein, wodurch eine flächige oder linienförmige Anlage an einer konischen Innenmantelfläche eines trichterförmigen Eingangs des Leerlaufkanals bewirkt werden kann. Eine konvex ausgebildete Abstützfläche bietet dabei den großen Vorteil, dass diese eventuelle Maßungenauigkeiten sowie Einbautoleranzen kompensieren kann. Auch hier stützt sich die Endscheibe über den Pin und die Abstützkonturen am Filtergehäuse ab.

Bei einer weiteren nicht unter die Erfindung fallenden Ausführungsform sind zwei Abstützkonturen separat und direkt benachbart zum Pin bzw. zu dessen Schaft an der unteren Endscheibe angeordnet und in der Art von Noppen bzw. Erhebungen ausgebildet. Derartige Noppen können einstückig mit der unteren Endscheibe ausgebildet und dadurch sowohl fertigungstechnisch einfach als auch kostengünstig hergestellt werden. Rein theoretisch ist es aber auch denkbar, derartige Abstützkonturen separat herzustellen und damit herkömmliche Ringfilterelemente nachzurüsten, indem die Abstützkonturen beispielsweise mit der unteren Endscheibe verschweißt oder verklebt werden. In diesem Fall ist es lediglich erforderlich, ein Filtergehäuse, in welchem das Ringfilterelement eingebaut wird, zu prüfen, ob bei diesem entsprechende Gegenabstützflächen, auf welchen sich die Abstützkonturen des Ringfilterelements abstützen können, vorhanden sind.

Erfindungsgemäß weist die Abstützkontur ringsegmentartige Abstützelemente auf, die zumindest teilweise rund um den Pin bzw. um dessen Schaft herum angeordnet sind. Durch die ringsegmentartig ausgebildete Abstützkontur mit in Umfangsrichtung dazwischen angeordneten Unterbrechungen, kann ein zuverlässiges Ablaufen lassen von in dem Filtergehäuse vorhandener Flüssigkeit beim Austausch des Ringfilterelements gewährleistet werden. Durch die ringsegmentartigen Abstützelemente kann zudem ein gleichmäßiges Abstützen der unteren Endscheibe gegenüber dem Filtergehäuse rund um den Pin bzw. dessen Schaft herum erfolgen, wodurch die Gefahr von Beschädigungen des Pins reduziert werden kann. Alternativ hierzu ist erfindungsgemäß auch denkbar, dass die Abstützkontur ringförmig geschlossen um den Pin herum angeordnet ist. In diesem Fall könnte die Abstützkontur als zusätzliche Dichtkontur genutzt werden, die bei in einem Filtergehäuse eingebauten Ringfilterelement und in einem Leerlaufkanal des Filtergehäuses eintauchenden Pin eine zusätzliche Abdichtung ermöglicht, sofern die Abstützkontur dicht an einem Eingang des Leerlaufkanals anliegt.

Bei einer weiteren nicht unter die Erfindung fallenden Ausführungsform könnte der Pin auch an dessen Spitze abgestützt werden, wenn im Leerlaufkanal beispielsweise ein Querbolzen eingebracht ist.

Die vorliegende Erfindung beruht weiter auf dem allgemeinen Gedanken, eine Flüssigfiltereinrichtung, beispielsweise ein Kraftstofffilter oder ein Ölfilter, mit einem Filtergehäuse mit einem Leerlaufkanal und einem in dem Filtergehäuse angeordneten erfindungsgemäßen Ringfilterelement auszubilden, wobei sich das Ringfilterelement in eingebautem Zustand über die zumindest eine in Axialrichtung von der unteren Endscheibe abstehende Abstützkontur direkt am Filtergehäuse abstützt. Hierdurch kann insbesondere eine Belastung auf den Pin bzw. einen Schaft des Pins, hervorgerufen durch beispielsweise Druckpulsationen im Betrieb der Flüssigfiltereinrichtung deutlich reduziert und dadurch die Lebenserwartung der Flüssigfiltereinrichtung deutlich gesteigert werden.

Zweckmäßig ist am Leerlaufkanal ein zumindest teilweise umlaufender Rand angeordnet, auf den sich das Ringfilterelement mit seiner unteren Endscheibe und seinen zwei Abstützkonturen mit ihren jeweils zu einer Oberfläche der unteren Endscheibe parallelen Abstützflächen abstützt. Hierdurch ist es möglich, die untere Endscheibe in Nähe des Leerlaufkanals gegenüber dem Filtergehäuse abzustützen, wodurch eine Entlastung des Pins ermöglicht wird.

Alternativ hierzu ist auch denkbar, dass der Leerlaufkanal einen trichterförmigen Eingang mit einer konischen Innenfläche aufweist, auf der sich das Ringfilterelement mit seiner unteren Endscheibe und seinen Abstützkonturen mit ihren jeweils zu einer Oberfläche der unteren Endscheibe geneigten Abstützflächen abstützt. Sind dabei die Abstützflächen eben ausgebildet, so kann durch eine ebenfalls ebene Gegenabstützfläche an der Innenfläche des trichterförmigen Eingangs eine flächige Anlage und damit eine flächige Abstützung erreicht werden. Denkbar ist aber auch eine konvexe Ausbildung der Abstützflächen der Abstützkonturen, wodurch diese lediglich punkt- oder linienförmig an filtergehäuseseitigen Gegenabstützflächen anliegen und dadurch eine Kompensation von beispielsweise Maß- oder Fertigungstoleranzen ermöglichen. Die Abstützkonturen können dabei am Schaft des Pins angeordnet sein, wobei der endscheibennahe Bereich des Schafts mit den Abstützkonturen auch als Bestandteil der unteren Endscheibe gesehen werden kann.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Dabei zeigen, jeweils schematisch:
- Fig. 1: eine Schnittdarstellung durch eine nicht unter die Erfindung fallende Ausführungsform der Flüssigfiltereinrichtung,
- Fig. 2: eine Detaildarstellung A aus Fig. 1 im Bereich eines Eingangs eines Leerlaufkanals sowie einer sich über Abstützkonturen gegenüber einem Filtergehäuse abstützenden unteren Endscheibe,
- Fig. 3: eine andere Ansicht auf eine nicht unter die Erfindung fallende untere Endscheibe eines nicht unter die Erfindung fallenden Ringfilterelements,
- Fig. 4: eine Schnittdarstellung durch ein Filtergehäuse im Bereich eines Leerlaufkanals mit einer sich über Abstützkonturen am Filtergehäuse abstützenden unteren Endscheibe einer nicht unter die Erfindung fallenden Ausführungsform des Ringfilterelements,
- Fig. 5: eine Ansicht von oben auf Gegenabstützkonturen am Filtergehäuse im Bereich eines Leerlaufkanals mit geschnittenem Pin,
- Fig. 6: eine teilweise geschnittene Ansicht eines Leerlaufkanals zur Verdeutlichung von schrägen Abstützflächen mit einer nicht unter die Erfindung fallenden Ausführungsform des Ringfilterelements,
- Fig. 7: eine Ansicht von unten auf eine untere Endscheibe eines nicht unter die Erfindung fallenden Ringfilterelements mit separat zum Pin angeordneten Abstützkonturen.

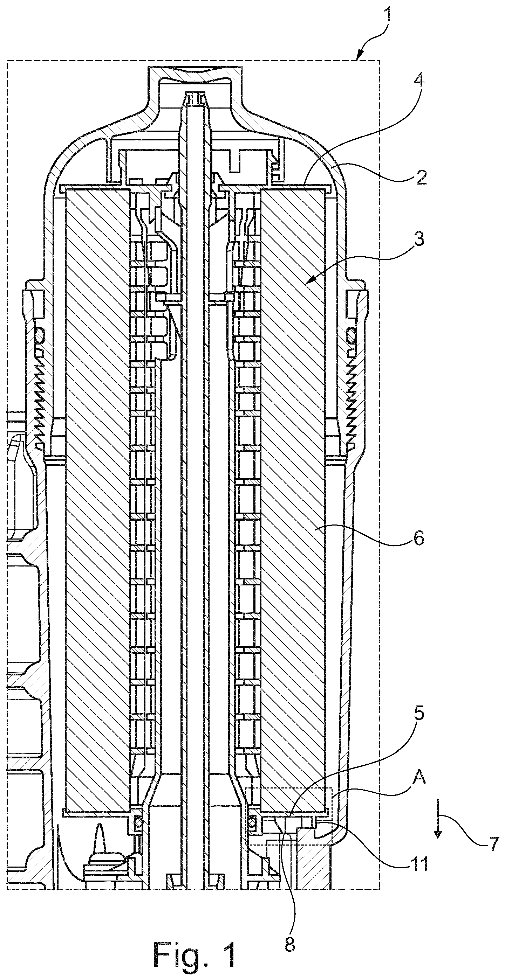

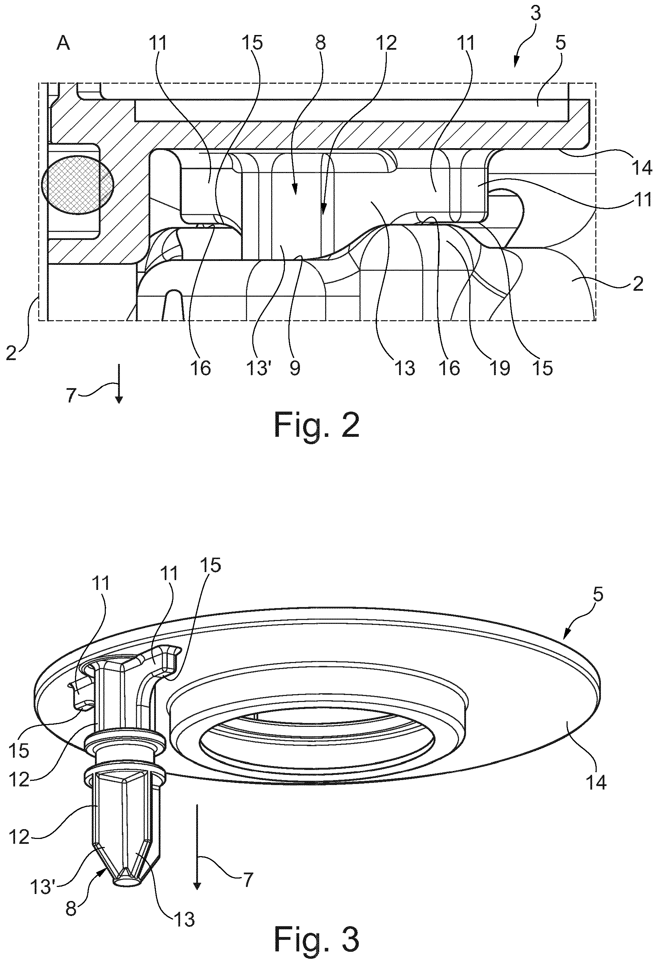

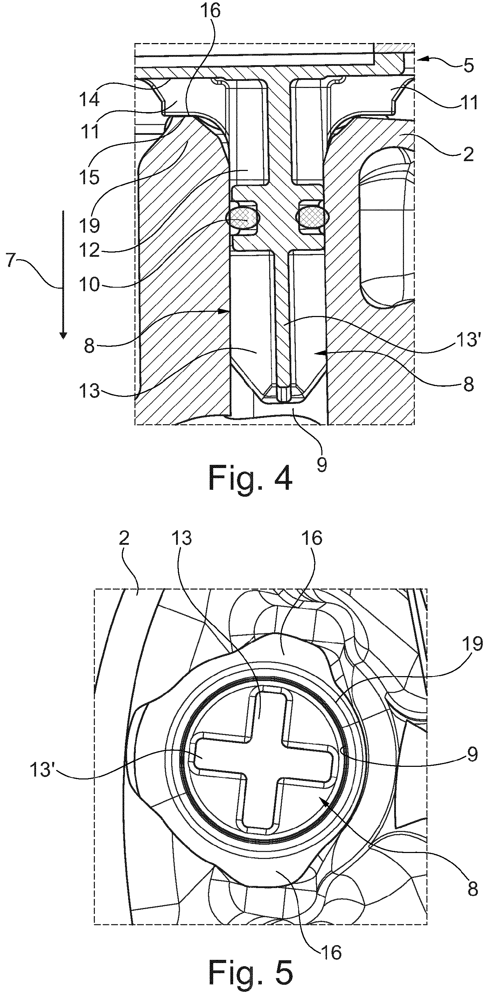

Entsprechend der Fig. 1, weist eine nicht unter die Erfindung fallende Ausführungsform der Flüssigfiltereinrichtung 1, beispielsweise ein Ölfilter, ein Hydraulikfilter oder ein Kraftstofffilter, ein Filtergehäuse 2 sowie ein darin angeordnetes und nicht unter die Erfindung fallendes Ringfilterelement 3 auf. Das Ringfilterelement 3 besitzt in bekannter Weise eine obere Endscheibe 4, eine untere Endscheibe 5 sowie ein dazwischen angeordnetes Filtermaterial 6, welches beispielsweise in Form eines zick-zack-förmig gefalteten Faltensterns ausgebildet ist. An der unteren Endscheibe 5 ist ein exzentrisch angeordneter und in Axialrichtung 7 von der unteren Endscheibe 5 abstehender Pin 8 (vgl. auch die Fig. 2 bis 7) zum Verschließen eines Leerlaufkanals 9 angeordnet. Bei in dem Filtergehäuse 2 eingebautem Ringfilterelement 3 taucht somit der Pin 8 in den Leerlaufkanal 9 ein und verschließt diesen, beispielsweise mittels einer O-Ringdichtung 10 (vgl. Fig. 4, 6 und 7). Erfindungsgemäß ist nun an der unteren Endscheibe 5 separat zum Pin 8 zumindest eine in Axialrichtung 7 von der unteren Endscheibe 5 abstehende Abstützkontur 11 vorgesehen, über welche sich die untere Endscheibe 5 und damit das Ringfilterelement 3 direkt am Filtergehäuse 2 abstützen kann. Dies bietet den großen Vorteil, dass beispielsweise von einer Pumpe im Betrieb der Flüssigfiltereinrichtung 1 hervorgerufene Druckpulsationen vom Ringfilterelement 3 über die Abstützkonturen 11 direkt an das Filtergehäuse 2 übertragen werden können und dadurch eine Belastung für den Pin 8 deutlich reduziert werden kann. Hierdurch kann insbesondere die Gefahr des Abbrechens des Pins 8 nahe der unteren Endscheibe 5 unter ständiger Druckpulsationsbeaufschlagung reduziert werden.

Im Folgenden wird nun auf unterschiedlichste Ausführungsformen der nicht unter die Erfindung fallenden Ausführungsform der Abstützkonturen 11 eingegangen:
Gemäß den Fig. 1 bis 4 sind zwei Abstützkonturen 11 vorgesehen, die sich jeweils tangential von einem Schaft 12 des Pins 8 aus erstrecken und sowohl mit dem Schaft 12 des Pins 8 als auch mit der unteren Endscheibe 5 einstückig ausgebildet sind. Dabei weist der Schaft 12 des Pins 8 einen kreuzförmigen Querschnitt mit zwei sich kreuzenden Stegen 13, 13' auf, wobei die beiden Abstützkonturen 11 an einen der Stege 13, 13' hier an den Steg 13, angeschlossen bzw. einstückig mit diesem ausgebildet sind. Hierdurch kann eine besonders einfache und kostengünstige Herstellung der nicht unter die Erfindung fallenden Abstützkonturen 11 geschaffen werden, da diese durch eine einfache Änderung eines Kunststoffspritzgießwerkzeugs zusammen mit dem Pin 8 bzw. dessen Schaft 12 und der gesamten unteren Endscheibe 5 hergestellt werden können.

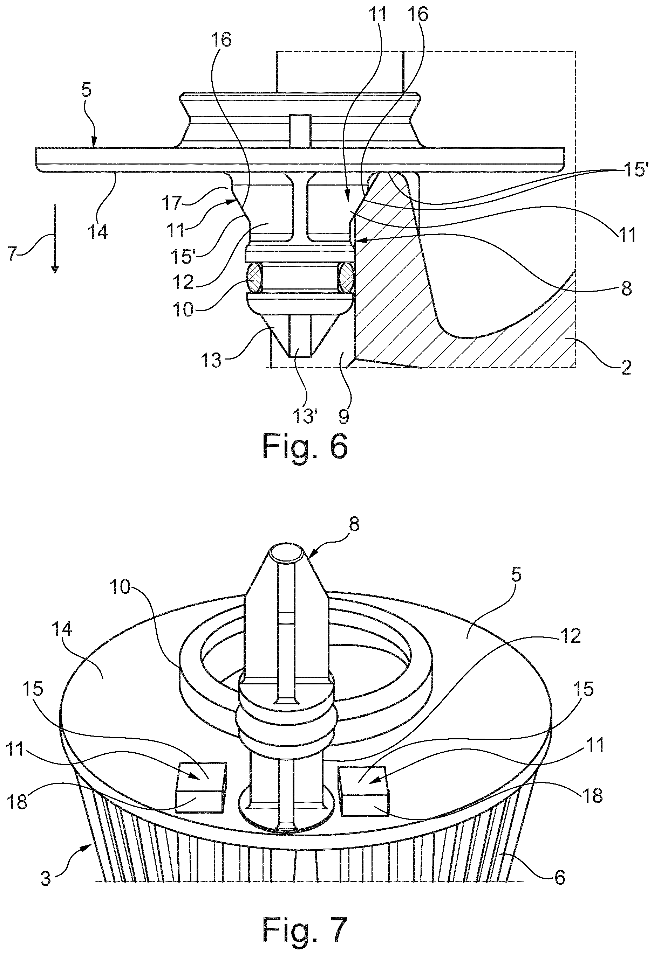

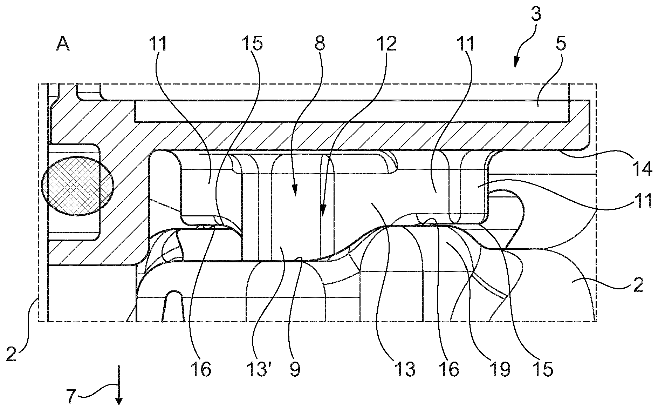

Betrachtet man die Abstützkonturen 11 gemäß den Fig. 1 bis 4, so kann man erkennen, dass die dort gezeigten Abstützkonturen 11 jeweils eine zu einer Oberfläche 14 der unteren Endscheibe 5 parallele Abstützfläche 15 aufweisen. Alternativ hierzu weisen die beiden Abstützkonturen 11 gemäß der Fig. 6 jeweils eine zu der Oberfläche 14 der unteren Endscheibe 5 geneigte Abstützfläche 15' auf.

Durch die einstückige Anbindung der zumindest einen Abstützkontur 11 an den Schaft 12 des Pins 8 kann insbesondere die dort bislang aufgrund des eckigen Übergangs vom Schaft 12 des Pins 8 in die untere Endscheibe 5 vorhandene Kerbbelastung, die mitursächlich für das Abreißen des Pins 5 aufgrund der Druckpulsationen war, deutlich reduziert bzw. sogar vermieden werden. Der Schaft 12 des Pins 5 kann dabei insbesondere in einem endscheibennahen Bereich noch als Bestandteil der unteren Endscheibe 5 angesehen werden. Die zumindest eine Abstützkontur 11 kann dabei auch in einem Übergangsbereich des Pins 8 bzw. dessen Schaft 12 in die untere Endscheibe 5 angeordnet sein. "Benachbart zum Pin 8" muss in diesem Zusammenhang bedeuten, separat zu diesem.

Die Abstützung der unteren Endscheibe 5 am Filtergehäuse 2 umfasst auch die indirekte Abstützung der unteren Endscheibe 5 über den Pin 8 und die Abstützkonturen 11 am Filtergehäuse 2, wodurch insbesondere der Pin 8 bei auftretenden Druckpulsationen direkt über die Abstützkonturen 11 am Filtergehäuse 2 abgestützt und dadurch nicht mehr in den Leerlaufkanal 9 hineingedrückt werden kann.

Die gemäß der Fig. 6 dargestellte Abstützfläche 15' kann dabei eben und schräg zur Oberfläche 14 der unteren Endscheibe 5 ausgebildet sein, oder aber konvex, wodurch keine flächige Anlage mit einer Gegenabstützfläche 16 an einem Eingang 17 des Leerlaufkanals 9 entsteht, sondern lediglich eine linienförmige Anlage. In diesem Fall ist der Eingang 17 trichterförmig mit einer konischen Innenfläche ausgebildet, auf der sich das Ringfilterelement 3 mit seiner unteren Endscheibe 5 und seinen zwei Abstützkonturen 11 mit ihren jeweils zur Oberfläche 14 der unteren Endscheibe 5 geneigten Abstützflächen 15' abstützt. Die Abstützkonturen 11 können in diesem Fall zusätzlich zur Ausrichtung des Pins 8 relativ zum Leerlaufkanal 9 dienen und dadurch ein leichtes Einführen des Pins 8 in den Leerlaufkanal 9 zumindest unterstützen.

Bei der Ausführungsform gemäß den Fig. 1 bis 5, sind die Abstützflächen 15 parallel zur Oberfläche 14 der unteren Endscheibe 5 ausgebildet, wobei zumindest eine Gegenabstützfläche 16 (vgl. Fig. 4) ebenfalls parallel zur Oberfläche 14 der unteren Endscheibe 5 verläuft, so dass eine flächige Abstützung der Abstützkonturen 11 über ihre Abstützflächen 15 an den gegenüberliegenden Gegenabstützflächen 16 erfolgt.

Erfindungsgemäß weist die Abstützkontur 11 (nicht gezeigte) ringsegmentartige Abstützelemente aufweist, die zumindest teilweise rund um den Pin 8 herum angeordnet sind. Hierdurch ist eine besonders gleichmäßige Abstützung der unteren Endscheibe 5 und damit des Ringfilterelements 3 in Axialrichtung 7 gegenüber dem Filtergehäuse 2 möglich. Bei einer alternativen erfindungsgemäßen Ausführungsform ist selbstverständlich auch denkbar, dass die Abstützkontur 11 als geschlossener Ring um den Schaft 12 des Pins 8 herum ausgebildet ist, so dass durch eine Anlage der Abstützkontur 11 über ihre Abstützfläche 15 eine dichte Anlage an einer Gegenabstützfläche 16 erreicht werden kann, wodurch die Abstützkontur 11 nicht nur eine Abstützfunktion, sondern zugleich auch eine Dichtfunktion übernehmen kann.

Alternativ hierzu ist bei einer nicht unter die Erfindung fallenden Ausführungsform auch denkbar, dass die zumindest eine Abstützkontur 11 separat und direkt benachbart zum Pin 8 an der unteren Endscheibe 5 angeordnet und in der Art von Noppen 18 ausgebildet ist. Eine derartige Ausführungsform mit zwei separat und direkt benachbart zum Pin 8 an der unteren Endscheibe 5 angeordneten Abstützkonturen 11 ist beispielsweise gemäß der Fig. 7 dargestellt. Mit einer derartig ausgebildeten Abstützkontur 11 ist es möglich, auch herkömmliche Ringfilterelemente nachzurüsten und unempfindlicher gegenüber Druckpulsationen zu machen. Wünschenswert ist es dabei, die Abstützkonturen 11 so nahe wie möglich am Schaft 12 des Pins 8 anzuordnen, um diesen direkt am Filtergehäuse 2 abstützen zu können.

Mit dem erfindungsgemäßen Ringfilterelement 3 und der erfindungsgemäßen Flüssigfiltereinrichtung 1 ist es möglich, die Belastung für einen Pin 8 während des Betriebs der Flüssigfiltereinrichtung 1, beispielsweise hervorgerufen durch von einer Pumpe ausgelöste Druckpulsationen, deutlich zu reduzieren und dadurch auch die Gefahr des Abbrechens des Pin 8 deutlich zu senken. Bewirkt wird dies erfindungsgemäß durch eine direkte Abstützung des Ringfilterelements 3 über seine untere Endscheibe 5 und den daran angeordneten Abstützkonturen 11 an dem Filtergehäuse 2. Zur Realisierung der erfindungsgemäßen Abstützkonturen 11 ist im günstigsten Fall lediglich eine einmalige Änderung eines für die Herstellung der unteren Endscheibe 5 verwendeten Kunststoffspritzgießwerkzeugs erforderlich. Über separat ausgebildete Abstützkonturen 11, die an die untere Endscheibe 5 von herkömmlichen Ringfilterelementen angeordnet, beispielsweise angeklebt oder angeschweißt, werden können, ist auch eine Nachrüstung vergleichsweise einfach möglich.

## Patentansprüche

1. Ringfilterelement (3),
- mit einer oberen Endscheibe (4), einer unteren Endscheibe (5) und einem dazwischen angeordneten Filtermaterial (6), insbesondere einem Faltenstern,
- mit einem an der unteren Endscheibe (5) exzentrisch angeordneten und in Axialrichtung (7) abstehenden Pin (8) zum Verschließen eines Leerlaufkanals (9),
**dadurch gekennzeichnet,**
- **dass** an der unteren Endscheibe (5) separat zum Pin (8) zumindest eine in Axialrichtung (7) von der unteren Endscheibe (5) abstehende Abstützkontur (11) zur Abstützung an einem Filtergehäuse (2) vorgesehen ist,
- **dass** die Abstützkontur (11) ringsegmentartige Abstützelemente aufweist, die zumindest teilweise rund um den Pin (8) herum angeordnet sind, oder dass die Abstützkontur (11) geschlossen ringförmig um den Pin (8) herum angeordnet ist.

2. Flüssigfiltereinrichtung (1) mit einem Filtergehäuse (2) mit einem Leerlaufkanal (9) und einem in dem Filtergehäuse (2) angeordneten Ringfilterelement (3) nach Anspruch 1, wobei sich das Ringfilterelement (3) in eingebautem Zustand über die zumindest eine in Axialrichtung (7) von der unteren Endscheibe (5) abstehende Abstützkontur (11) am Filtergehäuse (2) abstützt.

3. Flüssigfiltereinrichtung nach Anspruch 2,
**dadurch gekennzeichnet,**
**dass** am Leerlaufkanal (9) ein zumindest teilweise umlaufender Rand (19) mit einer Gegenabstützfläche (16) angeordnet ist, auf der sich das Ringfilterelement (3) mit seiner unteren Endscheibe (5) und seiner zumindest einen Abstützkontur (11) mit ihrer jeweils zu einer Oberfläche (14) der unteren Endscheibe (5) parallelen Abstützfläche (15) abstützt.

4. Flüssigfiltereinrichtung nach Anspruch 2,
**dadurch gekennzeichnet,**
**dass** der Leerlaufkanal (9) einen trichterförmigen Eingang (17) mit einer konischen Innenfläche aufweist, die die Gegenabstützfläche (16) bildet, auf der sich das Ringfilterelement (3) mit seiner unteren Endscheibe (5) und zwei Abstützkonturen (11) mit ihren jeweils zu einer Oberfläche (14) der unteren Endscheibe (5) geneigten Abstützflächen (15') abstützt.

## Claims

1. Ring filter element (3),
- having an upper end plate (4), a lower end plate (5) and a filter material (6) arranged in between, in particular a folded star,
- having a pin (8), arranged eccentrically at the lower end plate (5) and protruding in axial direction (7), for closing a no-load operation channel (9), **characterized in that**
- at the lower end plate (5) separate from the pin (8) there is at least one supporting contour (11) protruding in axial direction (7) from the lower end plate (5) for supporting on a filter housing (2),
- **in that** the supporting contour (11) has ring segment-like supporting elements which are arranged at least partially around the pin (8), or **in that** the supporting contour (11) is arranged in a closed ring shape around the pin (8).

2. Liquid filter apparatus (1) having a filter housing (2) having a no-load operation channel (9) and a ring filter element (3) according to claim 1 arranged in the filter housing (2), wherein the ring filter element (3) is supported on the filter housing (2) in the installed state by the at least one supporting contour (11) protruding in axial direction (7) from the lower end plate (5).

3. Liquid filter apparatus according to claim 2,
**characterized in that**
an at least partially peripheral edge (19) with a counter supporting surface (16) is arranged on the no-load operation channel (9), on which counter supporting surface the ring filter element (3) is supported with its lower end plate (5) and its at least one supporting contour (11) with its supporting surface (15) parallel in each case to a surface (14) of the lower end plate (5).

4. Liquid filter apparatus according to claim 2,
**characterized in that**
the no-load operation channel (9) has a funnel-shaped inlet (17) with a conical inner surface, which forms the counter supporting surface (16) on which the ring filter element (3) is supported with its lower end plate (5) and two supporting contours (11) with their supporting surfaces (15') inclined in each case relative to a surface (14) of the lower end plate (5).

## Revendications

1. Élément filtrant annulaire (3),
- avec un disque d'extrémité supérieur (4), un disque d'extrémité inférieur (5) et un matériau de filtre (6) agencé entre eux, en particulier une étoile plissée,
- avec une broche (8) agencée de manière excentrée au niveau du disque d'extrémité inférieur (5) et faisant saillie dans la direction axiale (7) pour fermer un canal de vidange (9), **caractérisé en ce que**
- au moins un contour d'appui (11) faisant saillie dans la direction axiale (7) par rapport au disque d'extrémité inférieur (5) est prévu sur le disque d'extrémité inférieur (5) séparément de la broche (8) pour un appui sur un boîtier de filtre (2),
- le contour d'appui (11) présente des éléments d'appui en forme de segment annulaire qui sont agencés au moins partiellement tout autour de la broche (8), ou **en ce que** le contour d'appui (11) est agencé fermé en forme d'anneau autour de la broche (8).

2. Appareil de filtration de liquide (1) avec un boîtier de filtre (2) avec un canal de vidange (9) et un élément filtrant annulaire (3) agencé dans le boîtier de filtre (2) selon la revendication 1, dans lequel l'élément filtrant annulaire (3) s'appuie à l'état monté sur le boîtier de filtre (2) via l'au moins un contour d'appui (11) faisant saillie en direction axiale (7) à partir du disque d'extrémité inférieur (5).

3. Appareil de filtration de liquide selon la revendication 2,
**caractérisé en ce que**
sur le canal de vidange (9) est agencé un bord (19) au moins partiellement périphérique avec une contre-surface d'appui (16) sur laquelle s'appuie l'élément filtrant annulaire (3) avec son disque d'extrémité inférieur (5) et son au moins un contour d'appui (11) avec sa surface d'appui (15) respectivement parallèle à une surface (14) du disque d'extrémité inférieur (5).

4. Appareil de filtration de liquide selon la revendication 2,
**caractérisé en ce que**
le canal de vidange (9) présente une entrée (17) en forme d'entonnoir avec une surface intérieure conique qui forme la surface de contre-appui (16) sur laquelle s'appuie l'élément filtrant annulaire (3) avec son disque d'extrémité inférieur (5) et deux contours d'appui (11) avec leurs surfaces d'appui (15') respectivement inclinées vers une surface (14) du disque d'extrémité inférieur (5).
